(19) Europäisches Patentamt
European Patent Office
Office européen des brevets

(11) **EP 1 880 565 B1**

(12) **EUROPÄISCHE PATENTSCHRIFT**

(45) Veröffentlichungstag und Bekanntmachung des
Hinweises auf die Patenterteilung:
**31.12.2008   Patentblatt 2009/01**

(21) Anmeldenummer: 06742314.5

(22) Anmeldetag: **08.05.2006**

(51) Int Cl.:
***H04Q 7/36*** *(2006.01)*

(86) Internationale Anmeldenummer:
**PCT/DE2006/000792**

(87) Internationale Veröffentlichungsnummer:
**WO 2006/119743 (16.11.2006 Gazette 2006/46)**

(54) **GENERIERUNG EINER RAUMBEZOGENEN VERKEHRSDATENBANK IN EINEM FUNKNETZ**

GENERATION OF A SPACE-RELATED TRAFFIC DATABASE IN A RADIO NETWORK

PRODUCTION D'UNE BANQUE DE DONNEES DE TRAFIC DE COMMUNICATIONS RELATIVE AU TERRITOIRE DANS UN RESEAU DE TELEPHONIE MOBILE

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**MK**

(30) Priorität: **13.05.2005   DE 102005022925**

(43) Veröffentlichungstag der Anmeldung:
**23.01.2008   Patentblatt 2008/04**

(73) Patentinhaber: **T-Mobile International AG
53227 Bonn (DE)**

(72) Erfinder: **PFEIFFER, Bernd
51465 Bergisch Gladbach (DE)**

(74) Vertreter: **Riebling, Peter
Patentanwalt
Postfach 31 60
88113 Lindau (DE)**

(56) Entgegenhaltungen:
**EP-A- 1 294 208          US-A1- 2003 186 693**

- **BECK R ET AL: "GRAND - A PROGRAM SYSTEM FOR RADIO NETWORK PLANNING" 1. September 1991 (1991-09-01), PHILIPS TELECOMMUNICATION REVIEW, PHILIPS TELECOMMUNICATIE INDUSTRIE N.V. HILVERSUM, NL, PAGE(S) 18-22 , XP000262481 das ganze Dokument**

**Beschreibung**

Technisches Gebiet

Die vorliegende Erfindung betrifft ein Verfahren zur Generierung einer raumbezogenen Verkehrsdatenbank für ein Funknetz. Dabei betrifft die Erfindung insbesondere ein Verfahren zur Generierung einer Verkehrsdatenbank für ein Multi-Layer-Funknetz. Ferner umfasst die vorliegende Erfindung ein entsprechendes Computerprogramm und ein Computerprogrammprodukt .

Hintergrund der Erfindung

Ein derartiges Verfahren lässt sich zur Planung und Vorhersage von aufkommendem Verkehr in einem Versorgungsgebiet eines zellularen Funknetzes, insbesondere eines digitalen Funknetzes, wie beispielsweise eines Funknetzes nach dem GSM- oder UMTS-Standard, einsetzen. Ein Verfahren zur räumlichen Vorhersage des Verkehrs in einem zellularen Funknetz ist beispielsweise aus dem Dokument US-2003/186693 A1 bekannt. Grundlage für die Generierung einer einsetzbaren Verkehrsdatenbank ist eine den realen Verhältnissen möglichst angepasste Zuweisung von sich in dem Gebiet bewegenden Kunden wie beispielsweise Mobilfunk-Endgeräten zu einer sie bedienenden Funkzelle des Funknetzes bzw. einer in dieser Funkzelle sich befindenden Basisstation. Hierzu ist aus der Präsentation "Radio Network Planning with EDGE" von Dr. Bernd Pfeiffer, vorgestellt bei der IBC-Conference "EDGE", Juni 2001, Dublin, ein vereinfachtes Verfahren bekannt, das auf der Anwendung eines Feldstärkeprädiktionsmodells für jede Funkzelle basiert. Die Funkzelle wird dabei durch ein Versorgungsgebiet definiert, in welchem die sich darin befindende Basisstation als sogenannter "Best Server" wirkt. Nach diesem Best-Server-Modell ist eine Zuordnung bzw. Zuweisung eines bestimmten Flächenelementes innerhalb des Funknetzes zu einer Funkzelle bzw. einer sich darin befindenden Basisstation eindeutig definiert. Solange sich ein Kunde innerhalb des dadurch eindeutig definierten Versorgungsgebietes einer bestimmten Funkzelle befindet, wird er von dem sogenannten Best Server versorgt. Außerhalb dieses Versorgungsgebietes wird er automatisch eindeutig von einer benachbarten bzw. anderen Funkzelle bedient, deren Basistation dann als Best Server agiert. Demnach gibt es nach dem Best-Server-Modell keine Überschneidung bzw. Korrelation hinsichtlich der Versorgung eines sich in dem Funknetz befindenden Kunden. Die Funkzellen sind eindeutig voneinander abgegrenzt und gleichzeitig unmittelbar aneinander angrenzend, so dass die Zuordnung eines sich darin bewegenden Kunden, wie beispielsweise eines Mobilfunk-Endgerätes, zu einer Funkzelle immer eindeutig ist.

Demgegenüber ist aus der Präsentation "Achieving the Optimal Mix of relevant and reliable input data for interference analysis and automatic frequency planning" von Dr. Bernd Pfeiffer, vorgestellt bei der IIR-Conference "The frequency planning technical forum", Mai 1998, London, bekannt, abweichend von dem vereinfachten, oben erwähnten Best-Server-Modell Korrelationen hinsichtlich der Versorgung eines Flächenelementes seitens benachbarter Funkzellen innerhalb eines Funknetzes mit Hilfe von sogenannten Zuordnungswahrscheinlichkeiten des Flächenelementes bzw. eines sich in dem Flächenelement befindenden Kunden, wie beispielsweise eines Mobilfunk-Endgerätes, zu den einzelnen Funkzellen zu berücksichtigen. Dabei wird jedem Flächenelement innerhalb des Funknetzes eine gewisse Wahrscheinlichkeit zugeordnet, mit welcher ein sich an diesem Flächenelement befindender Teilnehmer, wie beispielsweise ein Mobilfunk-Endgerät, durch eine bestimmte Funkzelle versorgt bzw. bedient wird. Solange sich das Mobilfunk-Endgerät an einem Flächenelement innerhalb des besagten Funknetzes aufhält, ist dabei die Summe der Zuordnungswahrscheinlichkeiten über alle dem Funknetz angehörenden Funkzellen kleiner oder gleich Eins. Ist die Summe der Zuordnungswahrscheinlichkeiten an einem Flächenelement kleiner Eins, so bedeutet dies, dass das betreffende Flächenelement nicht mehr vollständig von dem Funknetz versorgt wird. Diese Situation liegt am Netzrand bzw. in Versorgungslücken des Funknetzes vor. Ist die Summe der Zuordnungswahrscheinlichkeiten an einem Flächenelement innerhalb des Funknetzes gleich Eins, so ist sichergestellt, dass der Teilnehmer an dem betreffenden Flächenelement mindestens von einer Funkzelle bedient wird. Allerdings ist gegenüber dem beschriebenen Best-Server-Modell nicht eindeutig, von welcher Funkzelle der Teilnehmer bedient wird, sondern eine Vorhersage kann hier lediglich mit der genannten Zuordnungswahrscheinlichkeit getroffen werden.

Während das sogenannte Best-Server-Funkzellenmodell als diskret bezeichnet werden kann, welches jedem Flächenelement genau eine Funkzelle zuordnet, führt die Verwendung eines sogenannten kontinuierlichen Funkzellenmodells dazu, dass jedem Flächenelement des Funknetzes eine Funkzelle nur mit einer gewissen Wahrscheinlichkeit zugewiesen werden kann.

Insbesondere ist bei Betrachtung von sogenannten Multi-Layer-Funknetzen zur Generierung einer raumbezogenen Verkehrsdatenbank das Best-Server-Modell zu vereinfacht, da hier durch die mehreren Schichten, die beispielsweise durch Überlagerung mehrerer Funknetze erzeugt werden können, eine eindeutige Zuweisung bzw. Zuordnung einer Funkzelle zu einem Flächenelement wenig realistisch erscheint.

Demnach war es eine Aufgabe der vorliegenden Erfindung, ausgehend von dem Best-Server-Modell, ein Verfahren bereitzustellen, mit dessen Hilfe es möglich ist, auch im Falle eines Multi-Layer-Funknetzes eine raumbezogene Verkehrsdatenbank zu generieren, mit deren Hilfe eine Vorhersage eines an den Flächenelementen innerhalb des Funknetzes aufkommenden Verkehrs möglich ist.

Zusammenfassung der Erfindung

Diese Aufgabe wird erfindungsgemäß durch ein Verfahren mit den Merkmalen des Patentanspruchs 1 gelöst. Vorteilhafte Weiterbildungen der Erfindung sind in den Unteransprüchen aufgeführt.

Gemäß Patentanspruch 1 der vorliegenden Erfindung wird ein Verfahren zur Generierung einer raumbezogenen Verkehrsdatenbank für ein Funknetz bereitgestellt, wobei das Funknetz mehrere Funkzellen umfasst, die jeweils einer Gruppe von Funkzellen zuordenbar sind. Dabei wird ein zu planendes Gebiet durch ein Raster in Flächenelemente unterteilt und jedem Flächenelement wird eine jeweilige Zuordnungswahrscheinlichkeit zu jeder der das Flächenelement versorgenden Funkzellen und eine Landnutzungsklasse aus einer endlichen Gruppe von Landnutzungsklassen zugeteilt. Gemäß dem erfindungsgemäßen Verfahren wird die Generierung der raumbezogenen Verkehrsdatenbank durch ein Minimierungsverfahren erreicht, bei dem für jede Funkzelle ein Abstand zwischen einem gemessenen Verkehr innerhalb der Funkzelle und einem vorherzusagenden Verkehr innerhalb der Funkzelle minimiert wird. Der vorherzusagende Verkehr einer jeweiligen Funkzelle wird dabei einer Aufsummierung von durch landnutzungsklassenspezifische und gruppenspezifische Koeffizienten gewichteten Flächenelementen gleichgesetzt, die Flächenelemente der jeweiligen Funkzelle ergeben sich für eine jeweilige Landnutzungsklasse und für eine jeweilige Gruppe von Funkzellen aus den Zuordnungswahrscheinlichkeiten der Flächenelemente zu den dabei umfassten Funkzellen und die Koeffizienten werden durch das Minimierungsverfahren bestimmt und der entsprechenden Funkzelle zugeordnet.

Das erfindungsgemäße Verfahren geht dabei von der genannten Best-Server-Methode aus, und wird dieser gegenüber erweitert bzw. auf Funknetze verallgemeinert, welche nicht durch das der Best-Server-Methode zugrundeliegende diskrete Funkzellenmodell beschreibbar sind.

Das erfindungsgemäße Verfahren gilt auch für das Best-Server-Modell, welches als Spezialfall eines diskreten Funkzellenmodells angesehen werden kann.

In einer Ausführungsform des erfindungsgemäßen Verfahrens werden die Landnutzungsklassen durch verschiedene Klassen städtischer Bebauung, verschiedene Klassen von landwirtschaftlicher Nutzung und Wäldern sowie durch Straßen und Autobahnen definiert.

Ferner ist es denkbar, als Funknetz ein Multi-Layer-Funknetz, bestehend aus mehreren überlagerten Funknetzen (Layern) zu verwenden. Die verschiedenen Layer des Funknetzes können beispielsweise ein GSM-Funknetz im 900MHz Frequenzband (GSM900) und ein GSM-Funknetz im 1800MHz Frequenzband (GSM1800) sein. Denkbar ist auch, ein GSM Makrozellen- und ein Mikrozellen-Funknetz des gleichen oder verschiedener Frequenzbänder, oder eine Kombination aus einem GSM- und einem UMTS-Funknetz, oder eine Überlagerung von zwei UMTS-Netzen mit verschiedenen Frequenzen zu verwenden, Auch bei Verwendung eines Mono-Layer-Funknetzes, bestehend aus einem 2G oder 3G Funknetz mit einer einfachen Abdeckung des Versorgungsgebietes, ist es möglich, die Verkehrsdatenbank auf Basis nur dieses einen Layers mit Hilfe eines Mono-Layers Funkzellenmodells, welches die Berechnung der Mono-Layer-Zuordnungswahrscheinlichkeiten ermöglicht, zu erzeugen.

Es ist möglich, wie in oben genannter Präsentation beschrieben, als Verfahren zur Berechnung der Zuordnungswahrscheinlichkeiten eines Flächenelementes zu den jeweiligen Funkzellen einen an dem Flächenelement mittels eines Feldstärkeprädiktionsmodells berechneten Feldstärkepegels der Funkzellen sowie in dem betreffenden Funknetz verwendete Handover-Algorithmen und an den das Flächenelement versorgenden Basisstationen eingestellte Handover-Parameter, die in dem Funknetz zur Steuerung der Handover-Algorithmen dienen, zu verwenden. Die Zuordnungswahrscheinlichkeiten fließen dann bei dem erfindungsgemäßen Verfahren als gegebene Größen ein.

Dabei kann für GSM-Funknetze die Summe über alle Zuordnungswahrscheinlichkeiten eines Flächenelementes kleiner oder gleich Eins sein. Im Falle von UMTS-Funknetzen kann die Summe aller Zuordnungswahrscheinlichkeiten an einem Flächenelement durch den Einfluss eines in diesen Funknetzen auftretenden sogenannten Soft-Handovers auch größer als Eins sein.

Im folgenden wird zunächst der Spezialfall des Best-Server-Modells beschrieben.

Das Funknetz umfasst dabei n aneinandergrenzende Funkzellen. In jeder Funkzelle kann dabei ein individueller Verkehr gemessen werden, welcher in einer Funkzelle i durch einen Messwert $m_i$ beschrieben werden kann. Bei dem gemessenen Verkehr kann es sich um Sprachverkehr handeln, denkbar ist jedoch auch, Datenverkehr als Messwert zu nehmen, um eine Verkehrsdatenbank für Datenverkehr zu generieren. Der Verkehr in jeder Funkzelle des Funknetzes kann demnach durch einen Vektor m beschrieben werden, der wie folgt aussieht:

$$m = \begin{pmatrix} m_1 \\ m_2 \\ \dots \\ m_n \end{pmatrix}$$

n ist dabei die Anzahl der Funkzellen in dem Funknetz. Ferner werden Landnutzungsklassen definiert, die für ein Gebiet die Nutzungsgewohnheiten umschreiben. Jedes Flächenelement kann dabei genau einer Landnutzungsklasse angehören. Zu jeder Landnutzungsklasse gehört ein Landnutzungsklassenkoeffizient. Diese Landnutzungsklassenkoeffizienten werden mit den griechischen Buchstaben $\alpha,\beta,\gamma$ usw. bezeichnet. Zu dem Landnutzungsklassenkoeffizienten $\alpha$ gehört ferner ein Vektor a, wobei dessen Koeffizienten $a_i$ den Flächenanteil einer Funkzelle i beschreiben, welcher der betrachteten Landnutzungsklasse a angehört. Für eine Landnutzungsklasse a ergibt sich dabei der Vektor a mit n Komponenten wie folgt:

$$a = \begin{pmatrix} a_1 \\ a_2 \\ \dots \\ a_n \end{pmatrix}$$

Jede Komponente $a_i$ des Vektors a wird dabei wie folgt berechnet:

$$a_i = \int_{\substack{landusage = a \\ Cell\ i\ is\ Best\ Server}} dx \qquad \text{mit der Einheit } [\text{km}^2]$$

Dies wird nunmehr für alle Funkzellen 1 bis n und für jede gegebene Landnutzungsklasse durchgeführt. In die Landnutzungsklassen sind, wie bereits erwähnt, auch sogenannte "Straßenklassen" eingeschlossen, was bedeutet, dass dadurch einem unterschiedlichen Nutzungsverhalten innerhalb von Straßen gegenüber weniger bewohnten Gegenden Rechnung getragen werden kann. Wichtet man nunmehr die für jede Landnutzungsklasse ergebenden Vektoren mit entsprechenden Landnutzungsklassenkoeffizienten und summiert dies auf, so ergibt sich der bereits eingeführte Vektor m, dessen Komponenten $m_i$ dem gemessenen Verkehr einer jeweiligen Zelle i entsprechen. Die Koeffizienten für eine jede der Landnutzungsklassen sind dabei unbekannt, und können durch Lösen der folgenden Gleichung bestimmt werden:

$$\alpha\begin{pmatrix} a_1 \\ a_2 \\ \dots \\ a_n \end{pmatrix} + \beta\begin{pmatrix} b_1 \\ b_2 \\ \dots \\ b_n \end{pmatrix} + \dots = \begin{pmatrix} m_1 \\ m_2 \\ \dots \\ m_n \end{pmatrix}$$

Die Koeffizienten bzw. die Wichtungsfaktoren, welche in obiger Gleichung mit griechischen Buchstaben bezeichnet sind, sind die unbekannten Variablen des Systems. Sind beispielsweise die Messdaten m in einer bestimmten Einheit wie beispielsweise Erlang für Sprachverkehr oder kbit/sec für Datenverkehr gegeben, so ist es offensichtlich, dass die Wichtungsfaktoren die Einheit Erlang/km$^2$ bzw. kbit/sec pro km$^2$ haben müssen. Werden beispielsweise 16 Landnutzungsklassen definiert und ein Funknetz mit 1000 Basisstationen betrachtet, so handelt es sich um ein Gleichungssystem mit 1000 Zeilen und 16 unbekannten Variablen. Dieses überbestimmte lineare Gleichungssystem ist im Allgemeinen nicht exakt lösbar, sondern in Form einer Näherung.

Die obengenannte Gleichung kann auch als ein gewöhnliches lineares Abbildungsproblem beschrieben werden. Dabei lässt sich für die Komponenten der den einzelnen Landnutzungsklassen zugeordneten Vektoren die folgende Matrix C einführen:

$$C = \begin{pmatrix} a_1 & b_1 & ... & r_1 \\ a_2 & b_2 & ... & r_2 \\ ... & ... & ... & ... \\ a_n & b_n & ... & r_n \end{pmatrix}$$

und die Wichtungskoeffizienten in vektorieller Form lauten wie folgt:

$$\gamma = \begin{pmatrix} \alpha \\ \beta \\ ... \\ \rho \end{pmatrix}$$

Dadurch erhält das Gleichungssystem die folgende Kurzform:

$$C \cdot y = m$$

Es ist von Vorteil, die n Basisstationen des Funknetzes noch in eine endliche Zahl von Gruppen zu unterteilen, wie beispielsweise $n_g$ Gruppen. Das bedeutet, dass jede Funkzelle i einer bestimmten Gruppe g(i) der $n_g$ Gruppen zugewiesen werden kann. g(i) bezeichnet dabei die Gruppennummer einer Funkzelle i. Eine Gruppe kann beispielsweise durch Angabe eines bestimmten Intervalls des gemessenen Verkehrs pro Zellenfläche definiert werden. Das bedeutet dann, dass alle Zellen in einer Gruppe eine ähnliche Verkehrsdichte haben. Durch die Einführung der Gruppen lässt sich obengenanntes Gleichungssystem in kleinere Subsysteme entsprechend der Anzahl $n_g$ der Gruppen von Funkzellen unterteilen, wobei jedes dieser Subsysteme die gleiche Struktur aufweist. Die zu bestimmenden Landnutzungsklassenkoeffizienten $y_k$ in jeder Gruppe k können dabei durch die folgende Bedingung bestimmt werden:

$$\min_{y_k} \frac{1}{2} \| C_k y_k - m \|_2^2 \quad ,$$

wobei $y_k \geq 0$ gelten muss.

Dies kann für jede Gruppe unabhängig voneinander ausgeführt werden, da zwischen zwei Funkzellen, die zu verschiedenen Gruppen gehören, keine Wechselwirkung bzw. Interaktion stattfindet. Das bedeutet, dass jede Gruppe einen unterschiedlichen Satz von Landnutzungsklassenkoeffizienten $y_k$ besitzen kann. Das bedeutet, dass die Wichtungen der Landnutzungsklassen in jeder Gruppe von Funkzellen unterschiedlich ausfallen können.

In einem Versorgungsgebiet einer Funkzelle i ist der Verkehr nach dem genannten Best-Server-Modell für jede Landnutzungsklasse mit dem entsprechenden Koeffizienten der Gruppe g(i) über das gesamte Versorgungsgebiet verteilt. Ist beispielsweise an einem Flächenelement x die Landnutzungsklasse a und die Funkzelle i der sogenannte Best Server, so ergibt sich für den lokalen Verkehr tw(x) (tw = traffic weight) folgender Ausdruck:

$$tw(x) = \alpha_{g(i)}$$

Die für jede Gruppe g(i) berechneten Koeffizienten $\alpha_g(i)$ können demnach in einer Verkehrsdatenbank für alle Funkzellen i der Gruppe g(i) gespeichert bzw. hinterlegt werden und verwendet werden, um an einem Flächenelement den lokalen Verkehr bestimmen zu können.

Ferner kann durch die in der so generierten Verkehrsdatenbank hinterlegten Koeffizienten der Verkehr innerhalb einer Funkzelle i bestimmt bzw. vorhergesagt werden. Dieser vorhersehbare Verkehr t(i) berechnet sich dabei wie folgt:

$$t(i) = \int_{Cell\ i\ is\ Best\ Server} tw(x) \cdot dx$$

Das bedeutet, dass im Falle von beispielsweise 16 Landnutzungsklassen, t(i) sich aus der folgenden Gleichung ergibt:

$$t(i) = \sum_{j=1}^{16} C_{g(i)}^{ij} \cdot y_{g(i)}^{j}$$

Gleichzeitig sollte der besagte Verkehr dem in der Funkzelle i gemessenen Verkehr entsprechen, das bedeutet, dass t(i) möglichst identisch mit $m_i$ ist.

Somit ist die Minimierungsbedingung oben genannter Gleichung äquivalent zu der Bedingung, dass die Summe der Differenzen zwischen dem ursprünglich gemessenen Verkehrswert $m_i$ und dem vorhergesagten Verkehr t(i), welcher aus der generierten Verkehrsdatenbank abgeleitet wurde, über alle Funkzellen minimiert wird:

$$\sum_{i=1}^{n} (t(i) - m_i)^2 = \min$$

Im Folgenden wird ein Ausführungsbeispiel des erfindungsgemäßen Verfahrens zur Generierung einer raumbezogenen Verkehrsdatenbank in einem Funknetz beschrieben.

In einem kontinuierlichen Funkzellenmodell ist jedoch, wie bereits erwähnt, die Zuweisung eines Flächenelementes zu einer Funkzelle hinsichtlich der Versorgung des Flächenelementes in der Regel nicht eindeutig, d.h. nur mit einer gewissen Zuordnungswahrscheinlichkeit bestimmbar. Das bedeutet, dass jedes Flächenelement eines zu planenden Gebietes einer spezifischen Funkzelle mit einer funkzellenspezifischen Zuordnungswahrscheinlichkeit zugeordnet werden kann. Diese Zuordnungswahrscheinlichkeit an einem Flächenelement x zu einer Funkzelle i soll im folgenden als ap(i,x) (ap= assignment probability) bezeichnet werden. Dies steht im Gegensatz zu dem beschriebenen diskreten Best-Server-Modell, nach welchem jedem Flächenelement genau eine Funkzelle zugeordnet werden kann.

In einem derart erweiterten Modell kann einer Funkzelle i ein Versorgungsgebiet "Area(i)" zugewiesen werden, was sich als Summe aller mit einer jeweils spezifischen Zuordnungswahrscheinlichkeit gewichteten Flächenelemente ergibt. Demnach kann das Versorgungsgebiet einer Funkzelle i wie folgt beschrieben werden:

$$Area(i) = \int ap(i,x) \cdot dx$$

Demnach muss die Berechnung für den vorherzusagenden Verkehr t(i) einer spezifischen Funkzelle i wie folgt modifiziert werden:

$$t(i) = \int ap(i,x) \cdot tw(x) \cdot dx$$

Dabei werden die aus einer zu generierenden Verkehrsdatenbank ableitbaren lokalen Verkehrsgewichte $tw(x)$ mit den entsprechenden Zuordnungswahrscheinlichkeiten $ap(i,x)$ gewichtet. Das Integral über das gesamte Gebiet gibt dadurch eine Aussage, welchen Verkehr man an einer bestimmten Funkzelle i erwarten kann. Dabei müssen die lokalen Verkehrsgewichte $tw(x)$ so bestimmt werden, dass wiederum garantiert wird, dass die jeweiligen Differenzen zwischen den ursprünglich gemessenen Verkehrsdaten $m_i$ der Funkzellen i und dem vorhergesagten Verkehr $t(i)$ der Funkzellen i, der aus der zu generierenden Verkehrsdatenbank abgeleitet werden soll, so klein wie möglich ist.

Im folgenden wird diese Vorgehensweise anhand eines ersten einfacheren Beispiels erläutert. Ein Flächenelement am Ort x wird betrachtet, welches in die Landnutzungsklasse a fällt. Es wird angenommen, dass drei Funkzellen i, j, k an diesem Flächenelement an dem Ort x eine Zuordnungswahrscheinlichkeit ungleich Null besitzen. Ferner wird angenommen, dass diese drei Funkzellen zu unterschiedlichen Funkzellengruppen g(i), g(j) und g(k) von ng Gruppen von Funkzellen gehören. Um nunmehr einen konsistenten Algorithmus zu erhalten, mit welchem einerseits eine Generierung einer Verkehrsdatenbank durchgeführt werden kann, und welcher andererseits eine realistische Verkehrsvorhersage in den Funkzellen ermöglicht, müssen in dem hier vereinfachten Beispiel alle drei Funkzellen i, j, k zu dem lokalen Verkehrsgewicht $tw(x)$ mit ihren jeweiligen Zuordnungswahrscheinlichkeiten beitragen, welche jeweils mit den entsprechenden gruppenspezifischen Landnutzungsklassenkoeffizienten $\alpha$ kombiniert werden. D.h. $tw(x)$ ergibt sich als Summe über die mit den entsprechenden Zuordnungswahrscheinlichkeiten gewichteten Landnutzungsklassenkoeffizienten der entsprechenden Gruppe, welcher die einzelnen Funkzellen angehören. Dies lässt sich wie folgt formulieren:

$$tw(x) = ap(i,x) \cdot \alpha_{g(i)} + ap(j,x) \cdot \alpha_{g(j)} + ap(k,x) \cdot \alpha_{g(k)}$$

Das bedeutet, dass das lokale Verkehrsgewicht $tw(x)$ sich aus der generierten Verkehrsdatenbank ergibt, wobei in der generierten Verkehrsdatenbank, wie auch am Best-Server-Modell beschrieben, die den Landnutzungsklassen zugeordneten Landnutzungsklassenkoeffizienten $\alpha$ hinterlegt sind. Das lokale Verkehrsgewicht $tw(x)$ entspricht demnach der Summe der einzelnen Landnutzungsklassenkoeffizienten, die wiederum mit entsprechenden Zuordnungswahrscheinlichkeiten der korrespondierenden Funkzellen gewichtet werden.

Daraus ergibt sich der vorhersehbare Verkehr $t(i)$ einer spezifischen Funkzelle i als das Integral bzw. die Summe über die lokalen Verkehrsgewichte $tw(x)$ über das gesamte Gebiet, wobei die einzelnen Flächenelemente wiederum mit ihrer jeweiligen Zuordnungswahrscheinlichkeit $ap(i,x)$ zu der Funkzelle i gewichtet werden. Somit ergibt sich für das Argument des Integrals der folgende Ausdruck:

$$ap(i,x) \cdot tw(x) = $$
$$ap(i,x) \cdot \left\{ ap(i,x) \cdot \alpha_{g(i)} + ap(j,x) \cdot \alpha_{g(j)} + ap(k,x) \cdot \alpha_{g(k)} \right\}$$

Aus diesem vereinfachten Fall von drei Funkzellen i, j und k, die unterschiedlichen Gruppen g(i), g(j) und g(k) von Funkzellen angehören, wird nunmehr erkennbar, dass die verschiedenen Funkzellen bzw. Gruppen von Funkzellen an einem Flächenelement des Funknetzes korrelieren bzw. interagieren, was sich in einem jeweiligen Produkt der Zuordnungswahrscheinlichkeiten im obigen Ausdruck niederschlägt.

Gleichzeitig müssen, um zu einer konsistenten Aussage zu gelangen, die Koeffizienten der einzelnen Landnutzungsklassen auch in dem gegenüber der Best-Server-Methode erweiterten Modell ein analoges lineares Gleichungsproblem erfüllen, was wiederum in einem Ausdruck $C \cdot y = m$ niedergeschrieben werden kann. m entspricht dabei wiederum einem Vektor, dessen Koeffizienten den gemessenen Verkehr $m_i$ an einer jeweiligen Funkzelle i entspricht.

Gegenüber dem vereinfachten Modell des Best-Server-Modells hat jedoch nun die Matrix C einer gegenüber der Matrix C des Best-Server-Modells erweiterte Dimension. Aufgrund der Tatsache, dass nunmehr eine Korrelation zwischen den einzelnen Funkzellen gegeben ist, ergeben sich die einzelnen Matrixelemente $a_{ij}$, welche ein Maß für die Überlappung einer Zelle i mit allen Zellen, welche der Gruppe j innerhalb der Landnutzungsklasse a angehören, wiedergeben, wie folgt:

$$a_{ij} = \int\limits_{Land\ usage=\alpha} ap(i,x) \cdot \left( \sum_{k,g(k)=j} ap(k,x) \right) \cdot dx$$

Da nunmehr die Funkzellen an einem Flächenelement mit einer Zuordnungswahrscheinlichkeit ungleich Null zu Funkzellen unterschiedlicher Gruppen mit unterschiedlichen Landnutzungsklassenkoeffizienten gehören können, kann das Gleichungssystem nicht länger in einfache unabhängige Gruppen von kleineren Subsystemen unterteilt werden. Demnach enthält nunmehr die Matrix C für alle Gruppen von Funkzellen Gebietsinformationen, wodurch sich die Matrix C wie folgt ausdrücken lässt:

$$C = \begin{pmatrix} a_{11} \dots a_{1n_g} & b_{11} \dots b_{1n_g} & \dots & r_{11} \dots r_{1n_g} \\ a_{21} \dots a_{2n_g} & b_{21} \dots b_{2n_g} & \dots & r_{21} \dots r_{2n_g} \\ \dots & \dots & \dots & \dots \\ a_{n1} \dots a_{nn_g} & b_{n1} \dots b_{nn_g} & \dots & r_{n1} \dots r_{nn_g} \end{pmatrix},$$

wobei der Vektor y, welcher wiederum die Koeffizienten für die einzelnen Landnutzungsklassen aufweist, entsprechend wie folgt formuliert werden kann:

$$y = \begin{pmatrix} \alpha_1 \\ \alpha_2 \\ \dots \\ \alpha_{n_g} \\ \beta_1 \\ \dots \\ \beta_{n_g} \\ \dots \\ \rho_{n_g} \end{pmatrix}$$

Diese Formulierung der Landnutzungsinformationsmatrix geht konform mit der modifizierten Methode der Verkehrsvorhersage. Der Lösungsalgorithmus minimiert wiederum die Differenz zwischen den ursprünglich gemessenen und den vorhergesagten Verkehrsdaten. Dabei ist es wichtig zu vermerken, dass die Matrix C auch Einträge umfasst, die Null sind. Ein Matrixelement $a_{ij}$ beschreibt die Größe der Überlappung einer Funkzelle i mit allen Funkzellen, welche eine Gruppennummer j innerhalb der Landnutzungsklasse a haben. Wenn beispielsweise alle die Funkzelle i umgebenden Funkzellen die gleiche Gruppennummer g(i) besitzen, so sind innerhalb der Matrix C alle Matrixelemente $a_{ij}$ mit j≠g (i) Null.

Verwendet man nun das eingangs erwähnte Best-Server-Modell, so ist offensichtlich, dass nur die Matrixelement $a_{ig(i)}$ ungleich Null sein werden. Demnach ist das Gleichungssystem analog zu dem im Zusammenhang mit der Best-Server-Methode beschriebenen und eine unabhängige Lösung für jede Gruppe ist möglich.

Durch den nun genannten Ausdruck der Matrix C ist es möglich, mit einem Satz von an den einzelnen Funkzellen i des Funknetzes gemessenen Verkehrswerten $m_i$ für jede Landnutzungsklasse a und für jede Gruppe $g_{(i)}$ der Funkzellen einen Koeffizienten $\alpha_{g(i)}$ zu bestimmen, welcher in die zu generierende Verkehrsdatenbank eingetragen werden kann. Mittels der somit bestimmten Koeffizienten lässt sich später der vorherzusagende Verkehr für eine spezifische Funkzelle i des Funknetzes bestimmen, nämlich über die Gleichung

$$t(i) = \sum_l \sum_k^{n_g} C_k^{il} y_k^l \, ,$$

wobei 1 einer jeweiligen Landnutzungsklasse und k einer Gruppe von Funkzellen entspricht.

Ein Vorteil des erfindungsgemäßen Verfahrens liegt darin, ein Funknetz wesentlich realitätsnäher beschreiben zu können. Das Funknetz wird hinsichtlich einer Verkehrsvorhersage besser abgebildet, da nicht von einer genau bestimmbaren Zuweisung eines Flächenelementes zu einer spezifischen Funkzelle ausgegangen wird, sondern jedem Flächenelement eine Zuordnungswahrscheinlichkeit zu einer Funkzelle des Funknetzes zugeteilt wird. Das Einfließen der verschiedenen Zuordnungswahrscheinlichkeiten bei der Bestimmung einer Verkehrsvorhersage für eine bestimmte Funkzelle ermöglicht eine realitätsnähere Abbildung.

Ferner gewährt das erfindungsgemäße Verfahren durch die lineare Gleichungsform eine schnelle numerische Erfassung bzw. Koeffizientenberechnung. Mittels eines Rechners kann somit sehr schnell das gesamte Funknetz hinsichtlich seiner Verkehrsdatenbank erfasst werden. Das bedeutet, dass zum einen eine Verkehrsdatenbank schnell generiert werden kann, zum anderen eine generierte Verkehrsdatenbank schnell modifiziert werden kann.

Darüber hinaus ist es möglich, einen sogenannten Verkehrs-Vorhersagefehler ("Traffic Prediction Error"), d.h. die Obengenannte Abweichung zwischen vorhergesagtem und gemessenem Verkehr einer Funkzelle, mittels des erfindungsgemäßen Verfahrens gering zu halten, da die Zuordnungswahrscheinlichkeiten sowohl für die Erstellung der Verkehrsdatenbank wie auch für die Vorhersage eines anfallenden Verkehrs Verwendung finden und dadurch ein sich gegenseitig ausgleichender Effekt für den Vorhersagefehler bewirkt werden kann.

Im Folgenden werden mehrere Anwendungsmöglichkeiten des erfindungsgemäßen Verfahrens beschrieben.

Die Verwendung von Zuordnungswahrscheinlichkeiten ist nützlich für verschiedenste Arten von Verkehrsdatenbanken. Im allgemeinen ist die Verwendung des erfindungsgemäßen Verfahrens möglich für Mono-Layer-Funknetze, welche nur in einer 2G- oder 3G-Netzwerkschicht arbeiten, oder in Funkzellenmodellen, welche zwischen verschiedenen Netzwerkschichten agieren.

Im folgenden wird ein 2G-Funknetz mit Basisstationen eines 2G-Layers betrachtet. Wie bereits in der eingangs genannten Präsentation beschrieben, liegt der Vorteil eines Funknetzmodells mit Zuordnungswahrscheinlichkeiten darin, dass eine realitätsnähere Berechnung eines Gebietes einer Funkzelle möglich wird. So wird beispielsweise in einem 2G-Mono-Layer-Funkzellenmodell, welches auf Handover basiert, ein Funkzellenversorgungsgebiet unter Berücksichtigung unmittelbarer bzw. direkter Handover-Parameter, wie beispielsweise einer Hysterese für ein Handover ("HO_MARGIN"), durch entsprechende Zuordnungswahrscheinlichkeiten beschrieben. Resultierend daraus lässt sich ein Funkzellenversorgungsgebiet in Abhängigkeit von diesen Handover-Parametern bestimmen und ist damit im Vergleich zu einem auf dem Best-Server-Modell basierenden Funkzellenversorgungsgebiet realistischer.

Da die Zahl ng der Gruppen der Funkzellen klein ist im Vergleich zur Zahl der Funkzellen, insbesondere in großen Netzwerken, ist zu erwarten, dass über große Gebiete alle sich überlappenden Funkzellen zu ein und derselben Gruppe gehören werden. Um eine daraus resultierende Konsequenz besser illustrieren zu können, wird das oben bereits erwähnte Beispiel der drei Funkzellen i, j, k an dem Flächenelement x herangezogen. Es wird angenommen, dass die drei Funkzellen zu derselben Gruppe g(i) gehören. Dadurch vereinfacht sich der Integrand des Integrals des vorherzusagenden Verkehrs t(i) an der Funkzelle i zu:

$$
\begin{aligned}
ap(i,x) \cdot tw(x) = {} & \\
ap(i,x) \cdot \big\{ & ap(i,x) \cdot \alpha_{g(i)} + ap(j,x) \cdot \alpha_{g(j)} + ap(k,x) \cdot \alpha_{g(k)} \big\} = \\
ap(i,x) \cdot \big\{ & ap(i,x) + ap(j,x) + ap(k,x) \big\} \cdot \alpha_{g(i)}
\end{aligned}
$$

Zudem gilt unter der Annahme, dass nur drei Funkzellen i, j, k vorliegen, dass die Zuordnungswahrscheinlichkeiten für das Flächenelement x sich in der Summe über die drei genannten Funkzellen zu 1 addieren. Dies geht aus der Normierungseigenschaft hervor, nämlich dass das Flächenelement x, solange es sich in der Zuständigkeit des Funknetzes befindet, von mindestens einer der Funkzellen i, j, k bedient werden muss. Diese Bedingung lässt sich wie folgt ausdrücken:

$$ap(i,x) + ap(j,x) + ap(k,x) = 1$$

Daraus ergibt sich der Integrand des genannten vorherzusagenden Verkehrs t(i) zu:

$$ap(i,x) \cdot tw(x) = ap(i,x) \cdot \alpha_{g(i)}$$

Daraus wird ersichtlich, dass sich auch ein Handoverbasiertes Funkzellenmodell, wie hier beschrieben, in der Regel vereinfachen lässt und die dafür generierte Verkehrsdatenbank ähnlich der Verkehrsdatenbank für das genannte Best-Server-Modell ist. Das bedeutet, dass in der Regel viele Koeffizienten der Matrix C des linearen Gleichungssystems in Realität Null sind und sich daher das Gesamtsystem vereinfacht. Ein Vorteil der Verwendung von Zuordnungswahrscheinlichkeiten gegenüber dem Best-Server-Modell kann darin gesehen werden, dass der durchschnittliche Fehler bei der Verkehrsvorhersage geringer ist, aber in jedem Fall ergibt sich eine "glattere" Verkehrskarte ("traffic map"), da an den Grenzen zwischen den Funkzellen, die zu verschiedenen Gruppen gehören, der Übergang der Landnutzungsklassenkoeffizienten unter Verwendung der Zuordnungsswahrscheinlichkeiten bestimmt wird.

Bei Betrachtung eines 3G-Funknetzwerks mit Basisstationen bzw. Funkzellen einer 3G-Schicht ergibt sich der Vorteil eines Funkzellenmodells mit Zuordnungswahrscheinlichkeiten wiederum in einer besseren Berechnung eines Funkzellenversorgungsgebiets. Zudem lässt sich in einem Funkzellenmodell, welches einen sogenannten "Soft"-Handoveralgorithmus verwendet, wie er beispielsweise in einem UMTS-Netzwerk realisiert ist, ein 3G-Soft-Handover mit korrespondierenden Methoden beschrieben. In diesem Fall kann in dem Funkzellenmodell berücksichtigt werden, dass in den Soft-Handover-Gebieten des UMTS-Funknetzes ein sich dort befindliches Mobilfunk-Endgerät mit einer gewissen Wahrscheinlichkeit auch mehr als einer Basisstation bzw. einem sogenannten "Node B" zuordnet. Dies bedeutet, dass an einem Flächenelement in diesem Soft-Handover Gebiet die Summe aller Zuordnungswahrscheinlichkeiten zu allen dort versorgenden Node Bs auch größer Eins werden kann.

Wenn die Verkehrsmessungen bzw. die gemessenen Daten an einem Node B bestimmt werden, so wird je nach Messverfahren unter Umständen der Verkehr in sogenannten Soft-Handover-Gebieten zwei oder mehrmals bestimmt, da für Mobilfunk-Endgeräte, die sich in den Soft-Handover-Gebieten befinden, eine Luftschnittstellenverbindung für zwei oder mehr Knoten Node B gleichzeitig besteht. Wenn derartige Verkehrsmessdaten zur Generierung einer Verkehrsdatenbank verwendet werden, so muss aus Konsistenzgründen bei dem verwendeten Funkzellenmodell ein derartiges Phänomen ebenfalls in Betracht gezogen werden.

Dies kann durch ein Funkzellenmodell beschrieben werden, welches eine sogenannte variable Normierung besitzt. Das bedeutet, dass es in einem Gebiet mit einem Soft-Handover erlaubt wird, dass die Summe aller Zuordnungswahrscheinlichkeiten in einem Flächenelement größer als Eins ist. Es ist zu erwarten, dass die mögliche Vereinfachung, wie sie im Falle eines 2G-Mono-Layers beschrieben ist, auch für größere Gebiete eines UMTS-Netzwerkes gültig sind. Dieses verbesserte 3G-Soft-Handover-Funkzellenmodell kann auch zur Generierung einer Verkehrsdatenbank und zur Vorhersage von Verkehr in konsistenter Weise verwendet werden.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Kurzbeschreibung der Erfindung

Die Erfindung ist anhand eines Ausführungsbeispieles in der Zeichnung schematisch dargestellt und wird im folgenden unter Bezugnahme auf die Zeichnung ausführlich beschrieben.

Figur 1    zeigt ein Beispiel für ein Multi-Layer-Funknetz, in welchem eine Verkehrsdatenbank mittels des erfin- dungsgemäßen Verfahrens generiert werden kann;

Figur 2    zeigt ein weiteres Beispiel für ein erfindungsgemäß verwendbares Multi-Layer-Netz;

Figur 3    zeigt noch ein anderes Beispiel für ein erfindungs- gemäß verwendbares Multi-Layer-Netz;

Figur 4    zeigt eine mögliche Unterteilung einer Funkzelle eines Funknetzes in Flächenelemente;

Figur 5    zeigt ein Beispiel für Zuordnungswahrscheinlichkei- ten eines 2G Mono-Layer-Funknetzes; und

Figur 6    zeigt ein Beispiel für Zuordnungswahrscheinlichkei- ten eines 2G Multi-Layer-Funknetzes.

Detaillierte Beschreibung

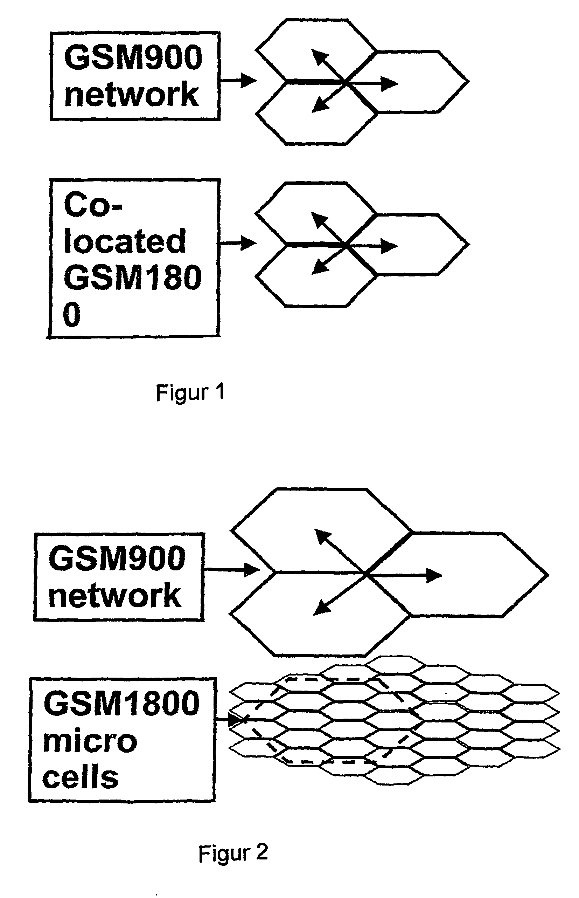

Es können mehrere Arten von Multi-Layer-Funknetzen zur Genierung einer Verkehrsdatenbank nach dem erfindungsgemäßen Verfahren eingesetzt werden. Dabei kann es sich beispielsweise, wie in Figur 1 gezeigt, um 2G-Multi-Layer-Funknetze, wie beispielsweise GSM900- und GSM1800-Funknetze handeln.

Um nur eine 2G-Verkehrsdatenbank für ein GSM900-Funknetz mit einem dies überlagernden GSM1800-Funknetz verwenden zu können, muss ein Multi-Layer-Funkzellen-Modell herangezogen werden. Der Vorteil der Verwendung nur einer Verkehrsdatenbank für die sich überlagernden GSM-Funknetze liegt darin begründet, dass in Gebieten, wo neue Basisstationen des GSM1800-Funknetzes aufgestellt werden, diese direkt den Verkehr von dem GSM900-Funknetz übernehmen können. Der Verkehr wird somit dynamisch in Abhängigkeit von dem zu betrachtenden Funknetz zwischen den Schichten aufgeteilt. Mittels der Zuordnungswahrscheinlichkeiten des Multi-Layer-Funkzellen-Modells wird der Aufteilung des Verkehrs zwischen den Schichten an jedem Flächenelement Rechnung getragen. Dabei kann von dem Multi-Layer-Funkzellenmodell bei der Bestimmung der Zuordnungswahrscheinlichkeiten vorteilhaft eine in dem Mulit-Layer-Funknetz angestrebte Aufteilung des Verkehrs zwischen den Netzebenen, welche sich zum Beispiel an der Kapazität der Netzebenen orientiert, berücksichtigt werden. Bei dem in Figur 1 gezeigten Funknetz handelt es sich um ein GSM Makrozellen Multi-Layer-Funknetz. Ein GSM900-Funknetz (GSM900network) wird dabei von einem koexistierenden GSM1800-Funknetz (Colocated GSM1800) überlagert.

Figur 2 zeigt ein GSM Makro-Mikrozellen Multi-Layer-Funknetz. Wiederum wird, wie in Figur 1, ein GSM900-Funknetz (GSM900network) von einem GSM1800-Funknetz (Colocated GSM1800) überlagert. Während in Figur 1 das GSM900-Funknetz und das GSM1800-Funknetz gleich große Funkzellen aufweisen, wird hier eine Funkzelle des GSM900-Funknetzes von einer Mehrzahl von kleineren Funkzellen des GSM1800-Funknetzes überlagert. Man spricht deshalb von einem Makro-Mikrozellen Multi-Layer-Funknetz.

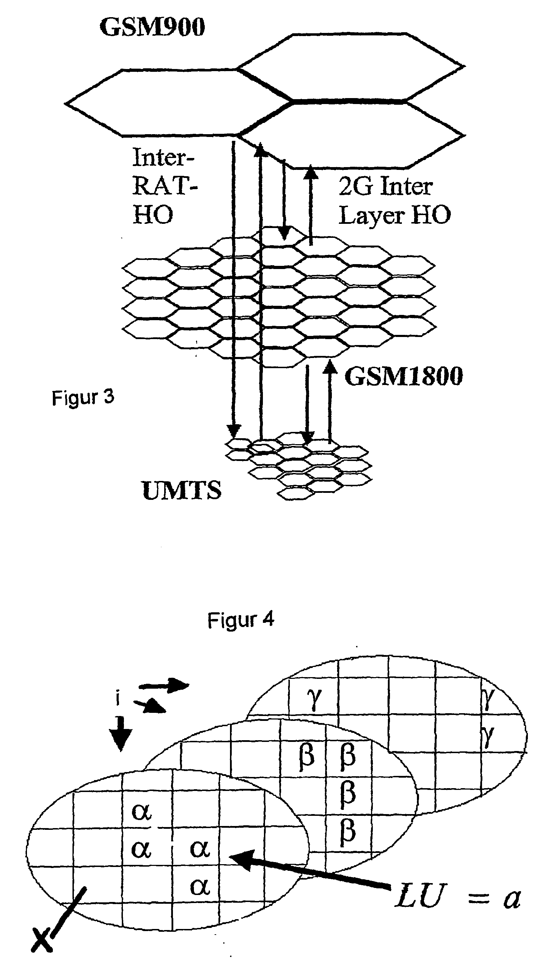

Figur 3 zeigt ein weiteres erfindungsgemäß verwendbares Multi-Layer-Funknetz, was hier durch Überlagerung eines UMTS-Funknetzes, eines GSM900-Funknetzes und eines GSM1800-Funknetz gebildet wird. Eine Funkzelle des GSM900-Funknetzes wird von einer Mehrzahl von Funkzellen des GSM1800- und gleichzeitig einer Mehrzahl von Funkzellen des UMTS- Funknetzes überlagert. Demnach kann ein 2G InterLayer-Handover (HO) zwischen dem GSM900-Funknetz und dem GSM1800-Funknetz, ein Inter-RAT-Handover (RAT = Radio Access Technology) zwischen dem GSM900-Funknetz und dem UMTS-Funknetz und auch zwischen dem GSM1800-Funknetz und dem UMTS-Funknetz stattfinden, was durch entsprechende Pfeile kenntlich gemacht ist.

Figur 4 zeigt eine Funkzelle i eines Funknetzes. Diese Funkzelle i ist weiter in eine Vielzahl von Flächenelemente x unterteilt. Jedes dieser Flächenelemente x läßt sich eindeutig einer Landnutzungsklasse LU (land usage) aus einer Gruppe von Landnutzungsklassen a, b, c usw. zuordnen. Ferner kann jeder Landnutzungsklasse LU in jeder Funkzelle i des Funknetzes eine Landnutzungsinformation zugewiesen werden, die je nach Komplexität des betrachteten Funknetzes entweder einer Summe über alle der entsprechenden Landnutzungsklasse zugeordneten Flächenelemente der betrachteten Funkzelle entspricht, wie es bei dem Best-Server-Modell der Fall ist, oder aber es ergeben sich aufgrund der einfließenden und zu berücksichtigenden Wechselwirkung mit anderen Funkzellen mehrere Ausdrücke. All diese Landnutzungsinformationen werden erfindungsgemäß in einer linearen Matrix C hinterlegt. Mittels dieser Matrix C und in den jeweiligen Funkzellen gemessenem Verkehr $m_i$ können letztlich für eine bestimmte Landnutzungsklasse Landnutzungsklassenkoeffizienten $\alpha, \beta, \gamma$ usw. bestimmt und in einer zu generierenden Verkehrsdatenbank hinterlegt werden. Jede Funkzelle i kann ferner zu einer Gruppe g(i) von $n_g$ Gruppen von Funkzellen zugeordnet werden, wobei sich dann für jede Landnutzungsklasse mehrere verschiedene gruppenspezifische Landnutzungsklassenkoeffizienten $\alpha_{g(i)}$, $\beta_{g(i)}$, $\gamma_{g(i)}$ usw. ergeben können, die dann in die Verkehrsdatenbank eintragen werden. Mittels der Matrix C und den hinterlegten Landnutzungsklassenkoeffizienten $\alpha_{g(i)}$, $\beta_{g(i)}$, $\gamma_{g(i)}$ usw. lässt sich dann für die Funkzelle i ein Verkehr t(i) vorhersagen.

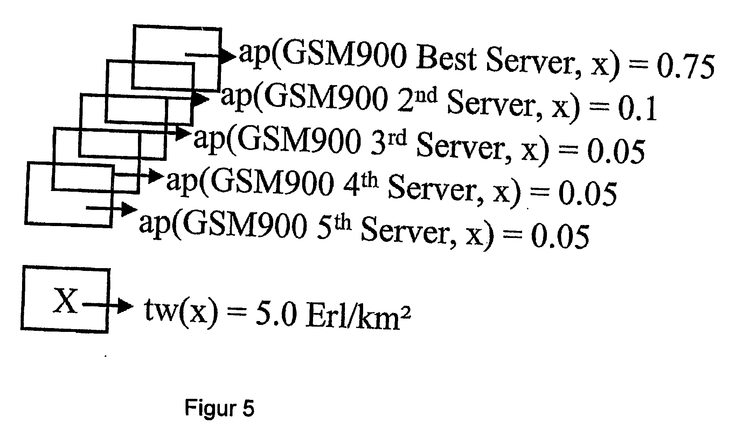

Figur 5 zeigt ein Beispiel für Zuordnungswahrscheinlichkeiten eines 2G Mono-Layer-Funknetzes. Innerhalb eines Versorgungsgebietes wird ein Flächenelement x betrachtet. An diesem Flächenelement x wurde ein lokaler Verkehr tw(x) (tw = traffic weight) zu 5.0Erl/km$^2$ bestimmt. Das 2G Mono-Layer Funknetz setzt sich zusammen aus einer Vielzahl von Funkzellen, wobei sich innerhalb jeder Funkzelle jeweils eine Basisstation befindet. Jeder Basisstation bzw. jeder Funkzelle kann nunmehr eine spezifische Zuordnungswahrscheinlichkeit hinsichtlich der Versorgung des Flächenelementes x durch eben diese Basisstation zugeschrieben werden. Ein Nutzer, der sich innerhalb des Flächenelementes x befindet, wird somit mit einer dieser jeweiligen Zuordnungswahrscheinlichkeit entsprechenden Wahrscheinlichkeit von der entsprechenden Basisstation versorgt. Einer Basisstation, nämlich dem sogenannten Best Server, fällt dabei die größte Zuordnungswahrscheinlichkeit zu. Der Best Server erhält an diesem Beispiel einen Verkehranteil von

0,75·5Erl/km$^2$, der zweitbeste Server einen Verkehrsanteil von 0,1·5Erl/km$^2$ usw.. Die Summe über alle Zuordnungswahrscheinlichkeiten ergibt sich zu Eins, was bedeutet, dass das Flächenelement x bzw. ein darin sich befindender Nutzer auf alle Fälle von einer Funkzelle bzw. einer entsprechenden Basisstation versorgt oder bedient wird.

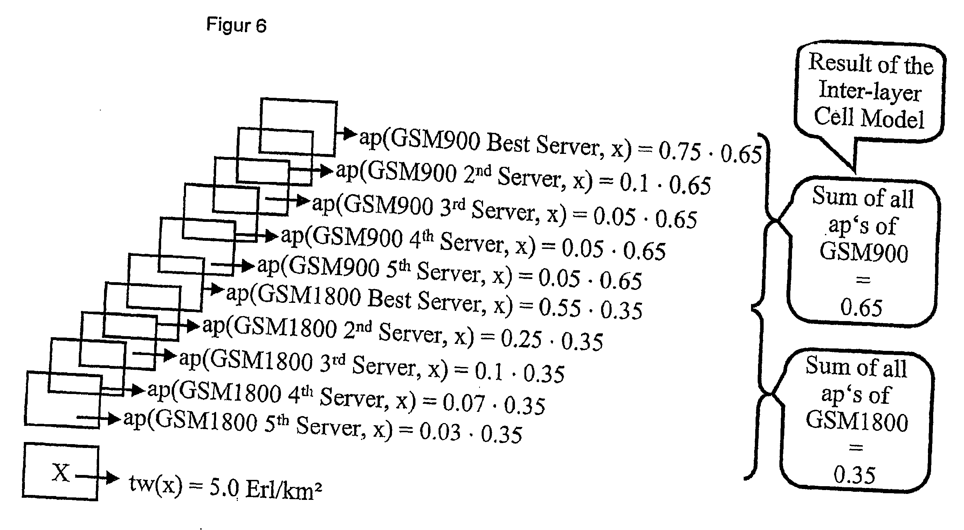

Figur 6 zeigt ein Beispiel, wie sich die in Figur 5 dargestellten Zuordnungswahrscheinlichkeiten durch Überlagerung eines zweiten 2G-Funknetzes verändern können. Es handelt sich hier um eine Überlagerung eines GSM900-Funknetzes mit einem GSM1800-Funknetz. In dem hier dargestellten Beispiel erhält an dem betrachteten Flächenelement x das GSM900-Funknetz einen Verkehrsanteil von 0,65·5Erl/km$^2$, der dann nochmals zwischen mehreren GSM900 Servern aufgeteilt wird. Das überlagerte GSM1800-Funknetz erhält in dem Beispiel einen Verkehrsanteil von 0,35.5Erl/km$^2$, der ebenfalls zwischen mehreren GSM1800 Servern aufgeteilt wird. Hierbei ist auch ein Handover-Algorithmus zwischen den verschiedenen Schichten bzw. Layern zu berücksichtigen. In dem hier gezeigten Beispiel ist die Summe der Zuordnungswahrscheinlichkeiten ebenfalls eins, aber die Zuordnungswahrscheinlichkeiten sind nunmehr über zwei Schichten bzw. Layer verteilt. Für beide Schichten wird eine gemeinsame Verkehrsdatenbank generiert und dann verwendet. Die Zuordnungswahrscheinlichkeiten gewähren eine dynamische Verkehrsaufteilung zwischen den Schichten.

## Patentansprüche

1. Verfahren zur Generierung einer raumbezogenen Verkehrsdatenbank für ein Funknetz, welches mehrere Funkzellen umfasst, die jeweils einer Gruppe von Funkzellen zuordenbar sind, wobei ein zu planendes Gebiet durch ein Raster in Flächenelemente unterteilt wird und jedem Flächenelement eine jeweilige Zuordnungswahrscheinlichkeit zu jeder der das Flächenelement versorgenden Funkzellen und eine Landnutzungsklasse aus einer endlichen Gruppe von Landnutzungsklassen zugeteilt wird, **dadurch gekennzeichnet, dass** die Generierung durch ein nimierungsverfahren erreicht wird, bei dem für jede Funkzelle ein Abstand zwischen einem gemessenen Verkehr der Funkzelle und einem vorherzusagenden Verkehr der Funkzelle minimiert wird, wobei der vorherzusagende Verkehr einer jeweiligen Funkzelle einer Aufsummierung von durch landnutzungsklassenspezifische und gruppenspezifische Koeffizienten gewichteten Flächenelementen gleichgesetzt wird, die Flächenelemente der jeweiligen Funkzelle für eine jeweilige Landnutzungsklasse und für eine jeweilige Gruppe von Funkzellen sich aus den Zuordnungswahrscheinlichkeiten der Flächenelemente zu den dabei umfassten Funkzellen ergeben, und die Koeffizienten durch das Minimierungsverfahren bestimmt und der entsprechenden Funkzelle zugeordnet werden.

2. Verfahren nach Anspruch 1, bei dem das Minimierungsverfahren einer Approximation an die Lösung eines linearen Gleichungssystems entspricht.

3. Verfahren nach Anspruch 1 oder 2, bei dem die Landnutzungsklassen durch geographisch abgrenzbare Bereiche, insbesondere durch verschiedene Klassen städtischer Bebauung, verschiedene Klassen landwirtschaftlicher Nutzung und Wäldern sowie durch Straßen und Autobahnen definiert werden.

4. Verfahren nach Anspruch 1, 2 oder 3, bei dem als Funknetz ein Multi-Layer-Funknetz, insbesondere ein GSM900-Funknetz mit einem dies überlagernden GSM1800-Funknetz verwendet wird.

5. Verfahren nach Anspruch 1, 2 oder 3, bei dem die Verkehrdatenbank auf Basis eines Layers eines Mono-Layer-Funknetzes erzeugt wird.

6. Verfahren nach einem der vorhergehenden Ansprüche, bei dem als ein Kriterium für eine Bestimmung der Zuordnungswahrscheinlichkeiten der Flächenelemente zu den jeweiligen Funkzellen ein zwischen benachbarten Funkzellen auftretendes Handover verwendet wird.

7. Verfahren nach einem der vorhergehenden Ansprüche, bei dem für ein Flächenelement, in dem ein Handover stattfindet, die Summe über alle Zuordnungswahrscheinlichkeiten des Flächenelementes kleiner 1 ist.

8. Verfahren nach einem der vorhergehenden Ansprüche, bei dem als Funknetz ein Funknetz gewählt wird, bei dem eine Funkzelle ausschließlich von Funkzellen umgeben ist, die der gleichen Gruppe wie die eine Funkzelle angehören, wodurch die Zuordnungswahrscheinlichkeiten für diejenigen Flächenelemente, die nichtverschwindende Zuordnungswahrscheinlichkeiten zu der einen Funkzelle besitzen, zu Zellen aus anderen Gruppen Null gewählt werden und damit auch die Flächenelemente, die sowohl der einen Funkzelle wie Funkzellen aus anderen Gruppen zugewiesen sind, Null werden.

EP 1 880 565 B1

**9.** Computerprogramm mit einem Programmcode zur Durchführung aller Schritte eines Verfahrens nach einem der Ansprüche 1 bis 8, wenn das Computerprogramm auf einem Computer oder einer entsprechenden Recheneinheit ausgeführt wird.

**10.** Computerprogrammprodukt mit einem Programmcode, der auf einem computerlesbaren Datenträger gespeichert ist, zur Durchführung aller Schritte eines Verfahrens nach einem der Ansprüche 1 bis 8, wenn der Programmcode auf einem Computer oder einer entsprechenden Recheneinheit ausgeführt wird.

**Claims**

**1.** Method for generating a regionally based traffic database for a radio network comprising a plurality of radio cells which are each assignable to a group of radio cells, wherein a territory to be planned is subdivided by a grid into unit areas and to each unit area is allotted a respective assignment probability to each of the radio cells supplying the unit area and a land usage class from a finite group of land usage classes, **characterised in that** generation is achieved by a minimisation method in which for each radio cell an interval between a measured traffic level in the radio cell and a traffic level to be predicted for the radio cell is minimised, wherein the traffic level to be predicted in any radio cell is equated to a summation of unit areas weighted by coefficients specific to land usage classes and groups, the unit areas in any radio cell for any land usage class and for any group of radio cells result from the assignment probabilities of the unit areas to the radio cells encompassed in doing so, and the coefficients are determined by the minimisation method and assigned to the corresponding radio cells.

**2.** Method according to claim 1 in which the minimisation method is an approximation to the solution of a linear system of equations.

**3.** Method according to claim 1 or 2 in which the land usage classes are defined by geographically delimitable regions, in particular by different classes of urban development, different classes of agricultural usage and forests and by roads and motorways.

**4.** Method according to claims 1, 2 or 3 in which for the radio network a multilayer radio network, in particular a GSM 900 radio network having an overlaid GSM 1800 radio network, is used.

**5.** Method according to claim 1, 2 or 3 in which the traffic database is generated on the basis of a layer of a monolayer radio network.

**6.** Method according to any of the preceding claims in which for determining the assignment probabilities of the unit areas to the respective radio cells a handover occurring between neighbouring radio cells is used as criterion.

**7.** Method according to any of the preceding claims in which for a unit area in which a handover takes place the sum over all assignment probabilities of the unit area is less than 1.

**8.** Method according to any of the preceding claims in which for the radio network a radio network is chosen in which a radio cell is surrounded exclusively by radio cells belonging to the same group as the single radio cell as a result of which the assignment probabilities for those unit areas having non-vanishing assignment probabilities to the single radio cell are selected as zero to cells of other groups and hence also the unit areas assigned both to the single radio cell and radio cells from other groups become zero.

**9.** Computer program having a program code for carrying out all steps in a method according to any of claims 1 to 8 when the computer program is executed on a computer or a corresponding computational unit.

**10.** Computer program product having a program code stored on a computer-readable data medium for carrying out all steps in a method according to any of claims 1 to 8 when the program code is executed on a computer or a corresponding computational unit.

**Revendications**

**1.** Procédé pour produire une banque de données de trafic à référence spatiale pour un réseau de téléphonie mobile

13

comprenant plusieurs cellules qui sont aptes à être affectées chacune à un groupe de cellules, étant précisé qu'une zone à planifier est divisée grâce à un quadrillage en éléments de surface, qu'à chaque élément de surface sont attribuées une probabilité d'affectation à chacune des cellules qui couvrent l'élément de surface, et une classe d'utilisation des terres parmi un groupe fini de classes d'utilisation des terres,

**caractérisé en ce que** ladite production est obtenue grâce à un procédé de minimisation selon lequel pour chaque cellule un écart entre un trafic mesuré de la cellule et un trafic à prévoir pour la cellule est minimisé, le trafic à prévoir pour une cellule étant comparé à une totalisation d'éléments de surface pondérés à l'aide de coefficients propres aux classes d'utilisation des terres et propres aux groupes, les éléments de surface de la cellule pour une classe d'utilisation des terres et pour un groupe de cellules résultant des probabilités d'affectation des éléments de surface aux cellules comprises, et les coefficients étant définis grâce au procédé de minimisation et étant affectés à la cellule correspondante.

2. Procédé selon la revendication 1, selon lequel le procédé de minimisation correspond à une approximation de la résolution d'un système linéaire d'équations.

3. Procédé selon la revendication 1 ou 2, selon lequel les classes d'utilisation des terres sont définies par des zones pouvant être délimitées géographiquement, en particulier par différentes classes de construction urbaine, par différentes classes d'utilisation agricole et de forêts, et par des routes et des autoroutes.

4. Procédé selon la revendication 1, 2 ou 3, selon lequel on utilise comme réseau de téléphonie mobile un réseau multicouche, en particulier un réseau GSM900 avec un réseau GSM1800 qui s'ajoute à celui-ci.

5. Procédé selon la revendication 1, 2 ou 3, selon lequel la banque de données de trafic est produite sur la base d'une couche d'un réseau monocouche.

6. Procédé selon l'une des revendications précédentes, selon lequel on utilise comme critère pour définir les probabilités d'affectation des éléments de surfaces aux cellules un transfert qui intervient entre des cellules voisines.

7. Procédé selon l'une des revendications précédentes, selon lequel pour un élément de surface dans lequel a lieu un transfert, la somme de toutes les probabilités d'affectation de l'élément de surface est inférieure à 1.

8. Procédé selon l'une des revendications précédentes, selon lequel on choisit comme réseau mobile un réseau mobile dans lequel une cellule est entourée uniquement de cellules qui appartiennent au même groupe que cette cellule, moyennant quoi pour les probabilités d'affectation pour les éléments de surface qui ont des probabilités d'affectation à une cellule non infiniment petites, on choisit zéro pour des cellules d'autres groupes, et les éléments de surface qui sont attribués aussi bien à une cellule qu'à des cellules d'autres groupes deviennent ainsi nuls.

9. Programme informatique avec un code de programme pour exécuter toutes les étapes d'un procédé selon l'une des revendications 1 à 8, si le programme informatique est exécuté sur un ordinateur ou sur une unité de calcul correspondante.

10. Produit de programme informatique avec un code de programme qui est mis en mémoire sur un support de données apte à être lu par un ordinateur, pour exécuter toutes les étapes d'un procédé selon l'une des revendications 1 à 8, s'il est exécuté sur un ordinateur ou sur une unité de calcul correspondant au code de programme.

GSM900 network

Co-located GSM180 0

Figur 1

GSM900 network

GSM1800 micro cells

Figur 2

**GSM900**

Inter-
RAT-
HO

2G Inter
Layer HO

Figur 3

**GSM1800**

**UMTS**

Figur 4

i

$\gamma$

$\gamma$

$\gamma$

$\beta$ $\beta$

$\beta$

$\beta$

$\alpha$

$\alpha$ $\alpha$

$\alpha$

$LU = a$

X

ap(GSM900 Best Server, x) = 0.75

ap(GSM900 2$^{nd}$ Server, x) = 0.1

ap(GSM900 3$^{rd}$ Server, x) = 0.05

ap(GSM900 4$^{th}$ Server, x) = 0.05

ap(GSM900 5$^{th}$ Server, x) = 0.05

X → tw(x) = 5.0 Erl/km²

Figur 5

Figur 6

ap(GSM900 Best Server, x) = 0.75 · 0.65
ap(GSM900 2nd Server, x) = 0.1 · 0.65
ap(GSM900 3rd Server, x) = 0.05 · 0.65
ap(GSM900 4th Server, x) = 0.05 · 0.65
ap(GSM900 5th Server, x) = 0.05 · 0.65
ap(GSM1800 Best Server, x) = 0.55 · 0.35
ap(GSM1800 2nd Server, x) = 0.25 · 0.35
ap(GSM1800 3rd Server, x) = 0.1 · 0.35
ap(GSM1800 4th Server, x) = 0.07 · 0.35
ap(GSM1800 5th Server, x) = 0.03 · 0.35

X — tw(x) = 5.0 Erl/km²

Result of the Inter-layer Cell Model

Sum of all ap's of GSM900 = 0.65

Sum of all ap's of GSM1800 = 0.35

EP 1 880 565 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003186693 A1